# EUROPEAN PATENT APPLICATION

(11) **EP 3 667 380 A1**
(43) Date of publication of application: **17.06.2020**
(21) Application number: 18212664.9
(22) Date of filing: 14.12.2018
(51) Int. Cl.: G02B 6/44

(54) **FIBER OPTIC MANAGEMENT DEVICE**

(71) Applicant: Corning Optical Communications LLC, Charlotte, NC 28216 (US)
(72) Inventor: Ruda, Michal, 93-430 Lodz (PL)
(74) Representative: Sturm, Christoph

(57) **Abstract**

A fiber optic management device (10) comprising a base (11), a tray (12) and a cover (13). The base (11) includes a first section (11a) for mounting the fiber optic management device (10) on a first fiber optic cable and to a mounting structure, a second section (11b) opposite the first section (11a), a third section (11c) extending between respective first ends of the first section (11a) and the second section (11b), and a fourth section (11d) extending between the first section (11a) and the second section (11b) proximate to the third section (11c). The tray (12) has a tray body (17) with a lower section (17a), an upper section (17b) and opposing sides (20) extending along the lower section (17a) and the upper section (17b). In the first mounting position of the tray (12), the opposing sides (20) of the tray body (17) are guided by mounting slots (21) provided by the first and second sections (11a, 11b) of the base (11) in such a way that the lower section (17a) and the upper section (17b) of the tray body (17) are arranged parallel to the fourth section (11d) of the base (11). In a second mounting position of the tray (12), the tray body (17) is mounted to the second section (11b) of the base (11) in such a way that the lower section (17a) and the upper section (17b) of the tray body (17)) are arranged perpendicular to the fourth section (11d) of the base (11). The cover (13) can be removably mounted on the base (11) when the tray (12) is mounted to the base (11) in the first mounting position and when the tray (12) is unmounted from the base (11).

## Description

The present patent application relates to a fiber optic management device for optical fibers of fiber optic cables.

When designing data transmission networks comprising optical fibers, it is necessary to handle optical fibers, especially to connect optical fibers to one another. Junctions between optical fibers can be provided by patch connections and splice connections. Such junctions need to be handled both outside buildings and inside buildings. Outside buildings, junctions between optical fibers are often accommodated in cable sleeves or street cabinets. Inside buildings, junctions between optical fibers are often handled in distribution cabinets or distribution frames. Wall boxes may be used for the handling of junctions between optical fibers both outside buildings and inside buildings.

The present disclosure is based on the object to provide a novel fiber optic management device for indoor applications providing greater comfort for the operator and thus increase the quality of created connections between optical fibers.

The fiber optic management device according to the present disclosure is defined in claim 1.

The fiber optic management device according to the present disclosure comprises a base, a tray which can be removably mounted to the base, and a cover for the base which can be removably mounted to the base.

The base of the fiber optic management device has a first section for mounting the fiber optic management device on a first fiber optic cable and to a mounting structure. The base of the fiber optic management device further has a second section opposite the first section. The base of the fiber optic management device further has a third section extending between respective first ends of the first section and the second section. The base of the fiber optic management device further has a fourth section extending between the first section and the second section proximate to the third section.

The tray of the fiber optic management device has a tray body with a lower section, an upper section, and opposing sides extending along the lower section and the upper section. The tray can be removably mounted to the base in a first mounting position and a second mounting position.

In the first mounting position of the tray, the opposing sides of the tray body are guided within mounting slots provided by the first and second sections of the base in such a way that the lower section and the upper section of the tray body are arranged parallel to the fourth section of the base.

In the second mounting position of the tray, the tray body is mounted to the second section of the base by the upper section of the tray body in such a way that the lower section and the upper section of the tray body are arranged perpendicular to the fourth section of the base.

The cover of the fiber optic management device can be removably mounted to the base and unmounted from the base when the tray is mounted to the base in the first mounting position and when the tray is unmounted from the base.

The fiber optic management device can be mounted on a fiber optic cable and to a mounting structure. The fiber optic management device allows managing, organizing, and connecting optical fibers in a very convenient way thereby increasing the quality of created connections between optical fibers. The fiber optic management device provides the possibility of unmounting the cover and disassembling the tray from the base. It allows the operator to work on connections in a convenient position with desirable setup. The fiber optic management device also provides the possibility of mounting the tray to the base in different position exposing an area in which connections of optical fibers are managed.

According to one embodiment , in the first mounting position of the tray, the lower section of the tray body overlaps the fourth section of the base, and the upper section of the tray body does not overlap the fourth section of the base. In this first mounting position of the tray the cover can be mounted to the base.

According to some embodiments, the upper section of the tray body comprises a drum-like guiding element for optical fibers. Said drum-like guiding element extends between a front side and a back side of the tray. Said drum-like guiding element may include a mounting clip configured to mount the tray body to the second section of the base in the second mounting position of the tray. This provides a favorable second mounting position allowing convenient access to existing connections between optical fibers and allowing the creating of high-quality new connections between optical fibers.

According to a some embodiments, the first section of the base comprises a side wall having a groove. The groove is adapted to receive the first fiber optic cable. The groove includes an opening through which optical fibers of the first fiber optic cable can be guided towards the tray. The side wall of the first section of the base may be adapted to receive fasteners adjacent to the groove for mounting the fiber optic management device to the mounting structure. This allows a very convenient managing, organizing, and connecting of optical fibers.

The third section of the base may comprise openings for second fiber optic cables. The fourth section of the base may comprise receiving elements for holding components that may be used to support the second fiber optic cables. The tray may further include the following on the tray body: a splice holder, at least one adapter, and a splitter leg support. This allows a very convenient managing, organizing, and connecting of optical fibers.

According to some embodiments, the second section of the base extends parallel to the first section of the base). And in some embodiments, the fourth section of the base extends in a direction perpendicular to the third section of the base.

A system comprising at least two fiber optic management devices is defined in claim 12.

Embodiments of the fiber optic management device are given in the dependent claims and the description below. Exemplary embodiments will be explained in more detail with reference to the drawing, in which:
- Figure 1: is a perspective view of a fiber optic management device according to the present disclosure;
- Figure 2: shows the fiber optic management device of Figure 1 with a cover re-moved and the tray in a first mounting position;
- Figure 3: shows the fiber optic management device of Figure 1 with strain relief elements and/or adapters;
- Figure 4: shows the fiber optic management device of Figure 2 with the tray in a second mounting position;
- Figure 5: shows a system of four fiber optic management devices;
- Figure 6: shows a detail of Figure 5.

The present disclosure relates to a fiber optic management device for managing, organizing, and connecting optical fibers in a very convenient way.

The fiber optic management device 10 according to the present disclosure comprises a base 11, a tray 12, and a cover 13.

The tray 12 is removably mounted on the base 11. So, the tray 12 can be mounted to the base 11 and unmounted from the base 11.

The cover 13 is also removably mounted to the base 11. The cover 13 can also be mounted to the base 11 and unmounted from the base 11.

When the cover 13 is mounted to the base 11, the base 11 and the cover 13 define together an enclosure that provides an interior space fiber of the optic management device 10. The tray 12 may be positioned within said interior space.

The base 11 of fiber optic management device 10 has a first section 11a for mounting the fiber optic management device 10 on a first fiber optic cable and to a mounting structure.

Said first section 11a of the base 11 comprises a side wall 14 providing a groove 15. The groove 15 may be U-shaped or the like. The groove 15, preferably a portion 14a of the side wall 14 providing the groove 15, is adapted to receive the first fiber optic cable so that the fiber optic management device 10 is mountable on the first fiber optic cable.

The side wall 14 of the first section 11a of the base 11 is adapted to receive fasteners adjacent to the groove 15 for mounting the fiber optic management device 10 to the mounting structure. Preferably portions 14b of the side wall 14 adjacent to the groove 15 are adapted to receive such fasteners.

The groove 15, preferably the portion 14a of the side wall 14 providing the groove 15, includes an opening 16 through which optical fibers of the first fiber optic cable can be guided into the interior space of the optic management device 10 towards the tray 12.

The base 11 of fiber optic management device 10 has further a second section 11b opposite the first section 11a. In some embodiments, like the one shown, the second section 11b extends parallel to the first section 11a.

The base 11 of fiber optic management device 10 also has a third section 11c extending between respective first ends of the first section 11a and the second section 11b. Said third section 11c provides a bottom section of the fiber optic management device 10. In some embodiments, like the one shown, the third section 11c of the base 11 extends perpendicular to the first section 11a and the second section 11b.

The third section 11c of the base 11 comprises openings 22 for second fiber optic cables. The second fiber optic cables can be guided from the exterior of the fiber optic management device 10 into the interior space of the fiber optic management device 10 through said openings 22 in the third section 11c of the base 11.

The base 11 of fiber optic management device 10 also has a fourth section 11d extending also between the first section 11a and the second section 11b proximate to the third section 11c. In the embodiment shown, the fourth section 11d extends in a direction perpendicular to the third section 11c. In fact, the fourth section 11d extends perpendicular to the first section 11a, the second section 11b, and the third section 11c.

As can be appreciated, the first section 11a, second section 11b, and third section 11c of the base 11 define edges of the base 11. Each may be referred to as an edge section, peripheral section, or outer section (e.g., first edge section 11a, second edge section 11b, third edge section 11c). The fourth section 11d spans between at least portions of the edge sections and, therefore, may be referred to as a spanning section or inner section.

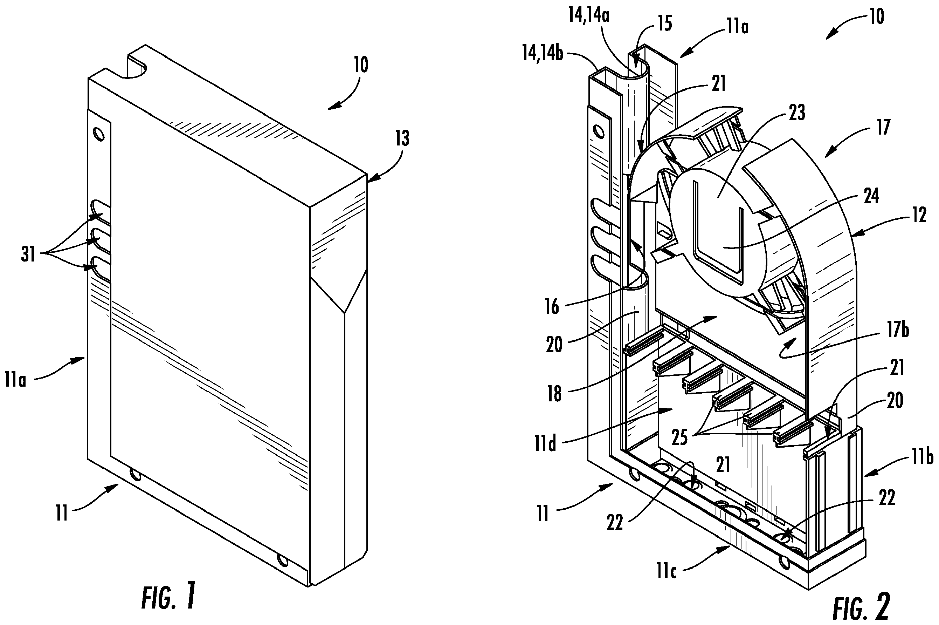

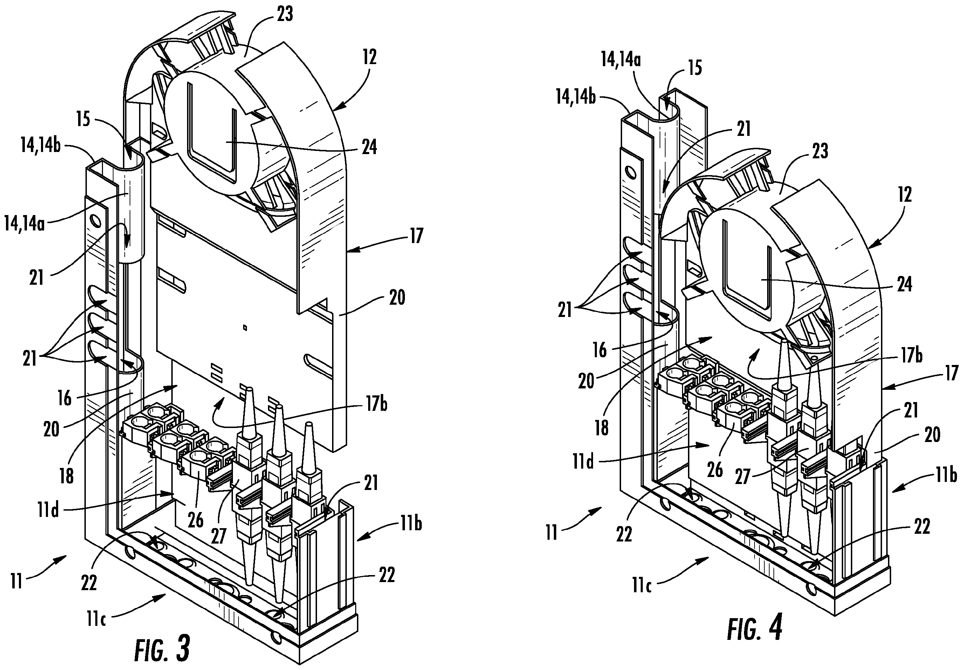

The tray 12 can be mounted to the base 11 and unmounted from the base 11. Thus, the tray 12 is removably mounted to the base 11. The tray 12 can be mounted to the base 11 in at least two different mounting positions (see Figures 2 and 4). The tray 12 has a tray body 17 with a lower section 17a, an upper section 17b, and opposing sides 20 extending along the lower section 17a and the upper section 17b. The sections 17a, 17b of the tray 17 define a front side 18 and a back side 19 of the tray 12.

The lower section 17a of the tray body 17 may also be called first section 17a of the tray body 17, and the upper section 17b may also be called second section 17b of the tray body 17.

In a first mounting position (see Figure 2) of the tray 12, the opposing sides 20 of the tray body 17 are guided by or within mounting slots 21 provided by the first and second sections 11a, 11b of the base 11. This interaction of the opposing sides 20 of the tray body 17 of the tray 12 with the mounting slots 21 of the base 11 allows a linear movement of the tray 12 relative to the base 11 when mounting the tray 12 to the base 11 in the first mounting position or when unmounting the tray 12 from said first mounting position.

In the first mounting position (see Figure 2) of the tray 17, the lower section 17a of the tray body 17 is adjacent to the third section 11c of the base 11 and, therefore, closer to the third section 11c than the upper section 17b of the tray body 17.

Additionally, in said first mounting position (see Figure 2) of the tray 12, the lower section 17a and the upper section 17b of the tray body 17 of the tray 12 both extend parallel to the fourth section 11d of the base 11.

When the tray 12 is mounted to the base 11 in said first mounting position, the fourth section 11d of the base 11 overlaps the lower section 17a of the tray body 17 of the tray 12, namely the front side 18 of the tray 12.

In said first mounting position of the tray 12, there is no overlap between the upper section 17b of the tray body 17 of the tray 12 and the fourth section 11d of the base 11.

When the tray 12 is mounted in a second mounting position (see Figure 4) to the base 11, the tray body 17 is mounted to the second section 11b of the base 11 in such a way that the lower section 17a and the upper section 17b of the tray body 17 of the tray 12 extend perpendicular to the fourth section 11d of the base 11.

The upper section 17b of the tray body 17 of the tray 12 comprises a drum-like guiding element 23 for optical fibers.

Said drum-like guiding element 23 extends between the front side 17 and the back side 18 of the tray 12. Optical fibers can be guided at the front side 17 of the tray 12, at the back side 18 of the tray 12 and between the front side 17, and the back side 18 of the tray 12 using said drum-like guiding element 23.

Said drum-like guiding element 23 includes a mounting clip 24 configured to mount the tray body 17 to the second section 11b of the base 11 in the second mounting position of the tray 12. Said mounting clip 24 is provided on the front side 18 of the tray 12 so that the back side 19 of the tray 12 is accessible when the tray 12 is mounted to the base 11 in the second mounting position (see Figure 4).

The cover 13 can be mounted on the base 11 and unmounted from the base 11 only when the tray 12 is mounted at the base 11 the first mounting position and when the tray 12 is unmounted from the base 11. In the second mounting position of the tray 12, it is not possible to mount the cover 13 on the base 11.

The fourth section 11d of the base 11 comprises receiving elements 25 for holding components that may be used to support the second fiber optic cables. The fourth section 11d may hold strain relief elements 26 for the second fiber optic cables and/or adapters 27 for the second fiber optic cables. As can be appreciated, the second fiber optic cables may enter into the interior space of the fiber optic management device 10 through the openings 22 in the third section 11c of the base 11. The receiving elements 25 may be equipped only with strain relief elements 26, only with adapters 27, or with a combination of strain relief elements 26 and adapters depending on the application.

The tray 12 may further includes the following on the tray body 17: a splice holder 28, at least one adapter 29, and a splitter leg support 30. In the shown embodiment, at the back side 19 of the tray 12, the tray 12 is adapted to carry at least one splice holder 28 for splices between optical fibers and/or at least one adapter 29 and/or at least one splitter leg support 30 for supporting a splitter leg to provide a connection between the optical fibers of the first fiber optic cable and the optical fibers of the second fiber optic cables depending on the application.

In an exemplary application, the back side 19 of the tray 12 carries the at least one splice holder 28 only. In this application, optical fibers of the first fiber optic cable which enter into the interior space of the fiber optic management device 10 through the opening 16 in the side wall 14 of the first potion 11a of the base 11 are guided to the tray 12, namely to the guiding element 23 of the tray 12, and from said guiding element 23 to the splice holder 28 attached to the back side of the tray 12. In this application, the splice holder 28 accommodates splices between the optical fibers of the first fiber optic cable and optical fibers of the second fiber optic cables which enter into the interior space of the fiber optic management device 10 through the openings 22 in the third potion 11c of the base 11. Said second fiber optic cables may be supported by the strain relief elements 26 and guided directly to the splice holder 28 along the guiding element 23.

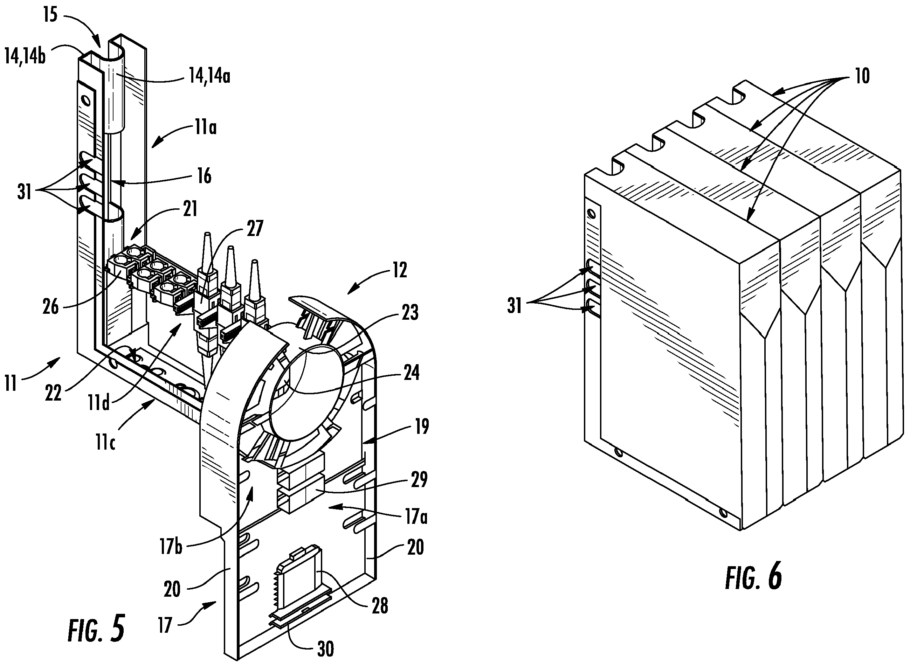

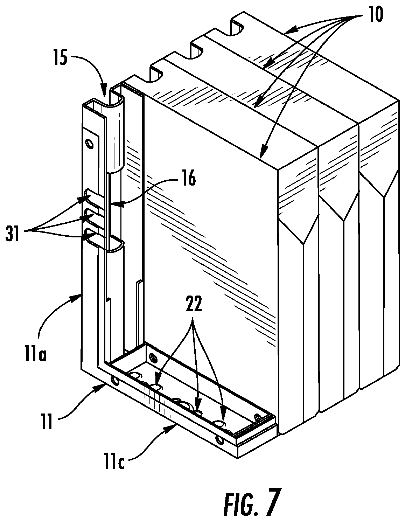

Figures 5 and 6 show a system of four fiber optic management devices 10 being positioned side-by-side in a row. The number of four fiber optic management devices 10 is an example only. The system may comprise less than four (e.g. two or three) or more than four fiber optic management devices 10.

One of the fiber optic management devices 10 can be mounted to the first fiber optic cable and to the mounting structure, while the other fiber optic management devices 10 can be mounted to the mounting structure only.

The first sections 11a of the bases 11 of the fiber optic management devices 10 provide respective transition channels 31 through which optical fibers of the first fiber optic cable can be guided between adjacent fiber optic management devices 10. These transition channels 31 are initially closed. When two fiber optic management devices 10 are mounted together side-by-side, the transition channels 31 are aligned (and, therefore, open to each other) so that it is possible to guide optical fibers between said fiber optic management devices 10.

### List of reference numerals

- 10: fiber optic management device
- 11: base
- 11a: first section
- 11b: second section
- 11c: third section
- 11d: fourth section
- 12: tray
- 13: cover
- 14: side wall
- 14a: portion
- 14b: portion
- 15: groove
- 16: opening
- 17: tray body
- 17a: lower section
- 17b: upper section
- 18: front side
- 19: backside
- 20: side
- 21: mounting slot
- 22: opening
- 23: guiding element
- 24: mounting clip
- 25: receiving elements
- 26: strain relief elements
- 27: adapter
- 28: splice holder
- 29: adapter
- 30: splitter support leg
- 31: transition channel

## Claims

1. A fiber optic management device (10), comprising:
a base (11) that includes:
a first section (11a) for mounting the fiber optic management device (10) on a first fiber optic cable and to a mounting structure,
a second section (11b) opposite the first section (11a),
a third section (11c) extending between respective first ends of the first section (11a) and the second section (11b), and
a fourth section (11d) extending between the first section (11a) and the second section (11b) proximate to the third section (11c),
a tray (12) which can be removably mounted to the base (11) in at least a first mounting position and a second mounting position, the tray (12) including:
a tray body (17) with a lower section (17a), an upper section (17b), and opposing sides (20) extending along the lower section (17a) and the upper section (17b),
wherein, in the first mounting position of the tray (12), the opposing sides (20) of the tray body (17) are guided within mounting slots (21) provided by the first and second sections (11a, 11b) of the base (11) in such a way that the lower section (17a) and the upper section (17b) of the tray body (17) are arranged parallel to the fourth section (11d) of the base (11),
wherein, in the second mounting position of the tray (12), the tray body (17) is mounted to the second section (11b) of the base (11) in such a way that the lower section (17a) and the upper section (17b) of the tray body (17) are arranged perpendicular to the fourth section (11d) of the base (11), and
a cover (13) which can be removably mounted on the base (11) when the tray (12) is mounted to the base (11) in the first mounting position and when the tray (12) is unmounted from the base (11).

2. The fiber optic management device of claim 1, **characterized in that**
in the first mounting position of the tray (12), the lower section (17a) of the tray body (17) overlaps the fourth section (11d) of the base (11) and the upper section (17b) of the tray body (17) does not overlap the fourth section (11d) of the base (11).

3. The fiber optic management device of either claim 1 or 2, **characterized in that**
the upper section (17b) of the tray body (17) comprises a drum-like guiding element (23) for optical fibers,
wherein said drum-like guiding element (23) extends between a front side (17) and a back side (18) of the tray (12).

4. The fiber optic management device of claim 3, **characterized in that**
said drum-like guiding element (23) includes a mounting clip (24) configured to mount the tray body (17) to the second section (11b) of the base (11) in the second mounting position of the tray (12).

5. The fiber optic management device of any one of claims 1 to 4, **characterized in that**
the first section (11a) of the base (11) comprises a side wall (14) having a groove (15),
wherein the groove (15) is adapted to receive the first fiber optic cable, and
wherein the groove (15) includes an opening (16) through which optical fibers of the first fiber optic cable can be guided towards the tray (12).

6. The fiber optic management device of claim 5, **characterized in that**
the side wall (14) of the first section (11a) of the base (11) is adapted to receive fasteners adjacent to the groove (15) for mounting the fiber optic management device (10) to the mounting structure.

7. The fiber optic management device of either claim 5 or 6, **characterized in that**
the third section (11c) of the base (11) comprises openings (22) for second fiber optic cables, and
the fourth section (11d) of the base (11) comprises receiving elements (25) for holding components that may be used to support the second fiber optic cables.

8. The fiber optic management device of any one of claims 1 to 7, **characterized in that**
the tray (12) further includes the following on the tray body (17): a splice holder (28), at least one adapter (29), and a splitter leg support (30).

9. The fiber optic management device of any one of claims 1 to 8, **characterized in that**
when the cover (13) is mounted on the base (11), the cover (13) and the base (11) define an enclosure having an interior space for accommodating the tray (12).

10. The fiber optic management device of any one of claims 1 to 9, **characterized in that**
the second section (11b) of the base (11) extends parallel to the first section (11a) of the base (11).

11. The fiber optic management device of any one of claims 1 to 10, **characterized in that**
the fourth section (11d) of the base (11) extends in a direction perpendicular to the third section (11c) of the base (11).

12. A system comprising at least two fiber optic management devices (10) of any one of claims 1 to 11,
one of the at least two fiber optic management devices (10) is mountable to the first fiber optic cable and to the mounting structure,
the or each other of the at least two fiber optic management devices (10) is mountable to the mounting structure,
the at least two fiber optic management devices (10) are positioned side by side in a row,
the first sections (11a) of the bases (11) of the at least two fiber optic management devices (10) include respective transition channels (31) through which optical fibers of the first fiber optic cable can be guided between the at least two fiber optic management devices (10).
